# EUROPEAN PATENT SPECIFICATION

(11) **EP 3 971 708 B1**
(45) Date of publication and mention of the grant of the patent: **17.01.2024**
(21) Application number: 21195033.2
(22) Date of filing: 06.09.2021
(51) Int. Cl.: G06F 8/656

(54) **IN-VEHICLE DEVICE, SOFTWARE UPDATE METHOD, NON-TRANSITORY STORAGE MEDIUM, VEHICLE, AND ELECTRONIC CONTROL UNIT**
FAHRZEUGVORRICHTUNG, SOFTWARE-AKTUALISIERUNGSVERFAHREN, NICHTFLÜCHTIGES SPEICHERMEDIUM, FAHRZEUG UND ELEKTRONISCHE STEUEREINHEIT
DISPOSITIF EMBARQUÉ, PROCÉDÉ DE MISE À JOUR LOGICIELLE, SUPPORT DE STOCKAGE NON TRANSITOIRE, VÉHICULE ET UNITÉ DE COMMANDE ÉLECTRONIQUE

(30) Priority: 17.09.2020 JP 2020156294
(43) Date of publication of application: 23.03.2022
(73) Proprietor: TOYOTA JIDOSHA KABUSHIKI KAISHA, Toyota-shi, Aichi-ken, 471-8571 (JP)
(72) Inventor: ISHIKAWA, Tomoyasu, Toyota-shi, 471-8571 (JP)
(74) Representative: J A Kemp LLP

(56) References cited:
- EP-A2- 1 434 129
- WO-A1-2011/087429
- US-A1- 2003 163 664

## Description

### BACKGROUND OF THE INVENTION

### 1. Field of the Invention

The present disclosure relates to an in-vehicle device, a software update method, a non-transitory storage medium, a vehicle, and an electronic control unit.

### 2. Description of Related Art

EP 1 434 129 A describes a rewrite control apparatus capable of saving data which should not be reset, and rewriting a program of a large capacity on a memory of a small capacity. For this purpose, a data area for storing vehicle condition data is provided in a storage medium of an onboard controller. When rewriting an onboard program, the apparatus writes the vehicle condition data into a storage area different from the data area, or a storage medium different from the storage medium and save it, and executes the rewrite, and after finishing the rewrite, it writes the saved vehicle condition data back into the data area.

A vehicle is equipped with a network system configured such that a plurality of in-vehicle devices called electronic control units (ECUs) is connected to each other via a communication line. Each of the in-vehicle devices transmits and receives a message to and from the other in-vehicle devices so as to share and execute functions of the vehicle. The in-vehicle devices typically include a processor and a transitory storage unit such as random access memory (RAM) or a non-volatile storage unit such as flash read-only memory (ROM). Software (a program) executed by the processor is stored in the non-volatile storage unit. Rewriting and updating of the software to a newer version makes it possible to upgrade and improve functions of the in-vehicle device.

Updating of the software involves a step of downloading in which update data is received from a server (a center) via a wireless communication, etc., and a step of installation in which update software is written in the storage unit of the in-vehicle device based on the downloaded update data. There are two types of installation of the software, that is, an overwriting installation and an other-bank installation, depending on the specification of the in-vehicle device. The overwriting installation is an installation in which the downloaded update software is written in one region (single bank) that is determined as a region for storing the software from the entire memory region of the storage unit by overwriting the software to be executed at the timing of the installation (previous software). The other-bank installation is an installation in which, of two regions (double banks) that are determined as regions for storing the software, the downloaded update software is written into one of the regions (other-bank) that is not a region (one-bank) in which the software to be executed at the timing of the installation (previous software) is stored. The two regions defined as regions for software storage may be, for example, regions included in each of the different banks (constituent units) of the same memory component, or each region of a different memory component such as a memory component of standard equipment and a memory component of extended equipment.

In the case of the other-bank installation, the step of updating software involves an activation step of activating the installed update software as the software to be executed, in addition to the steps of downloading and installation.

In relation to the software update of the ECU, Japanese Unexamined Patent Application Publication No. 2011-148398 (JP 2011-148398 A) discloses a technology that a specific ECU functions as a master ECU, communicates with a server, and updates the software of the master ECU and other ECUs.

### SUMMARY OF THE INVENTION

The in-vehicle device generally executes software using vehicle-specific setting values and learned values. Such values are typically stored in a region (called a first region) in which the software to be executed is stored. In order to continue to use such values when updating software by the above-mentioned other-bank installation, in addition to processing of writing the update software in the second region that is different from the first region, it is necessary to perform processing of reading such values from the first region and writing the values in the second region. This processing requires work using, for example, a dedicated tool, and reduces work efficiency.

The present disclosure provides an in-vehicle device, a software update method, a non-transitory storage medium, and a vehicle capable of efficiently inheriting vehicle-specific setting values and learned values in software updates of the in-vehicle device.

An in-vehicle device according to a first aspect of the present invention is defined in appended claim 1.

A software update method according to a second aspect of the present invention is defined in appended claim 3.

A non-transitory storage medium according to a third aspect of the present invention stores a software update program that causes a computer to execute the software update method according to the second aspect. The software update program is executable by the computer of an in-vehicle device included in an in-vehicle network and having a storage unit for storing software and one or more values used for executing the software.

A vehicle according to a fourth aspect of the present invention the in-vehicle device according to the first aspect.

According to the disclosed technology, when the in-vehicle device updates the software, the vehicle-specific setting values and learned values are copied, so that these values can be efficiently inherited without the need to perform work such as writing the values separately.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a configuration diagram of a network system according to an embodiment;
FIG. 2 is a configuration diagram of an in-vehicle device according to the embodiment; and
FIG. 3 is a sequence diagram showing processing according to the embodiment.

### DETAILED DESCRIPTION OF EMBODIMENTS

### Configuration

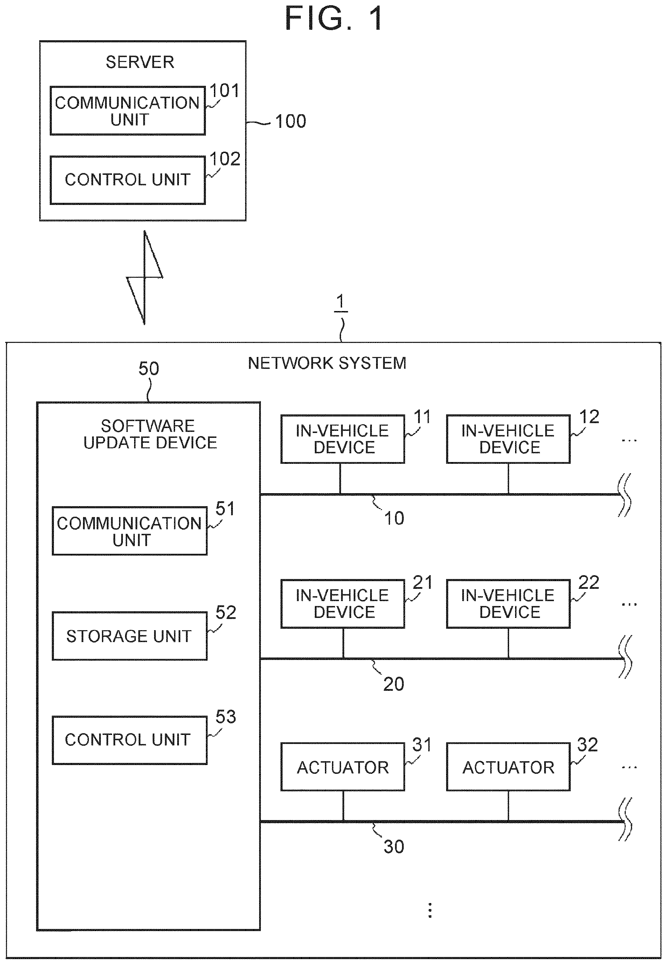

FIG. 1 shows a configuration example of a network system 1 according to an embodiment. The network system 1 is mounted on a vehicle. The network system 1 includes a software update device 50. A plurality of buses 10, 20, 30 ... is connected to the software update device (over-the-air (OTA) master) 50. A plurality of in-vehicle devices (electronic control units) 11, 12 ... is connected to the bus 10. A plurality of in-vehicle devices 21, 22 ... is connected to the bus 20. A plurality of actuators 31, 32 ... is connected to the bus 30. In FIG. 1 and the following description, the buses 10, 20, 30 are exemplified as the buses, the in-vehicle devices 11, 12, 21, 22 are exemplified as the in-vehicle devices, and the actuators 31, 32 are exemplified. However, the numbers of the buses, the in-vehicle devices, and the actuators are not limited. In addition, various sensors for acquiring the states of the vehicle and the surroundings of the vehicle are appropriately connected to the buses 10, 20, 30, or the in-vehicle devices 11, 12, 21, 22.

The software update device 50 includes a communication unit (communication module) 51 that is communicable with a server (center, external device) 100 installed outside the vehicle, a storage unit (storage) 52 that stores various types of data, and a control unit 53.

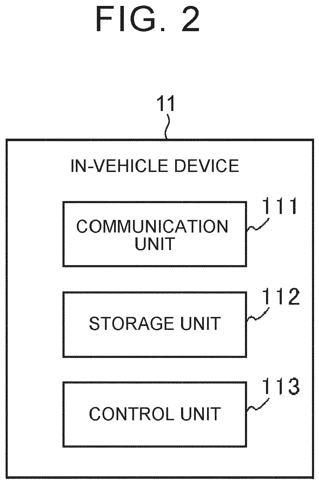

The in-vehicle devices 11, 12, 21, 22 communicate with each other via a network and execute various types of processing for controlling the vehicle. FIG. 2 shows a configuration example of the in-vehicle device 11. The in-vehicle device 11 includes a non-volatile storage unit (storage) 112 such as flash read only memory (ROM), a control unit (one or a plurality of processors, one or a plurality of microcontrollers) 113 that performs various types of processing by reading software from the storage unit 112 and executing the software, and a communication unit 111 that communicates with other in-vehicle devices and the software update device 50. Further, although not shown, the in-vehicle device 11 includes a temporary storage unit such as random access memory (RAM) for storing a part of software or data. The in-vehicle devices 12, 21, and 22 are similarly configured. Similarly, the software update device 50 also stores software (a program) for the software update device 50 in the storage unit 52, and the control unit 53 (one or a plurality of processors, one or a plurality of microcontrollers) reads and executes the software, so that a function of the software update device 50 can be executed. That is, each of the in-vehicle devices 11, 12, 21, 22 and the software update device 50 can be implemented as a computer including a processor, a microcontroller, or the like.

The control unit 53 of the software update device 50 controls and relays communication between the server 100 and the in-vehicle devices 11, 12, 21, 22, communication among the in-vehicle devices 11, 12, 21, 22, communication between the in-vehicle devices 11, 12, 21, 22 and the actuators 31, 32, via the buses 10, 20, 30. As described above, the software update device 50 also functions as a relay device that relays communication. Alternatively, the software update device 50 may be provided as a part of such a relay device, or may be provided separately from such a relay device by being connected to any of the buses 10, 20, 30.

The actuators 31, 32 are, for example, in-vehicle devices that generate mechanical actions with respect to the vehicle and parts of the vehicle, such as a brake, an engine, or a power steering device, and operate based on commands from the in-vehicle devices 11, 12, 21, 22. The actuators 31, 32 may also include a computer configured of a processor, a microcontroller, memory, or the like.

The control unit 53 of the software update device 50 can update the software stored in the respective storage units of the in-vehicle devices 11, 12, 21, 22. That is, the software update device 50 executes download control or installation control, or further executes activation control of the software. Downloading is processing to receive, from the server 100, the transmitted update data (distribution package) for updating the software in any of the in-vehicle devices 11, 12, 21, 22 and to store the update data. The download control may include, in addition to execution of downloading, control of a series of processing related to downloading, such as determination as to whether to execute downloading and verification of the update data. Installation is processing to write an update version of the software (update software) in the second storage unit of an update-target in-vehicle device of which software is a target of an update based on the downloaded update data. The installation control may include, in addition to execution of installation, control of a series of processing related to installation, such as determination as to whether to execute installation, transfer of the update data, and verification of the updated version of the software. Activation is processing of configuring, for example, a setting value of an execution start address of the software in order to activate the installed updated version of the software as the software to be executed. The activation control may include, in addition to execution of activation, control of a series of processing related to activation, such as determination as to whether to execute activation and verification of execution results.

In the installation control, when the update data includes the update software itself, the control unit 53 can transmit the update software to the in-vehicle device. When the update data includes compressed data, difference data, or divided data of the update software, the control unit 53 can generate the update software by decompressing or assembling the update data and transmit the update software to the in-vehicle device. Alternatively, the control unit 53 may transmit the update data to the in-vehicle device, and the in-vehicle device may generate the update software by decompressing or assembling the update data.

The control unit 53 may execute installation to write the update software to the second storage unit of the in-vehicle device, the in-vehicle device that has received a command from the control unit 53 may execute the installation, or the in-vehicle device that has received the update data (or the update software) may autonomously execute the installation without an explicit command from the control unit 53.

The control unit 53 may execute activation to activate the installed update software, the in-vehicle device that has received a command from the control unit 53 may execute the activation, or the in-vehicle device may autonomously execute the activation following the installation without an explicit command from the control unit 53.

Note that, the update processing of the software as described above can be executed continuously or in parallel with respect to the in-vehicle devices. The update data is data used for generating the update software. The content and format of the update data are not limited. For example, the update data includes the update software itself, difference data for generating the update software, or compressed data or divided data of the update software, etc., as described above. Further, the update data may include an identifier (ECU ID) of the update-target in-vehicle device (target electronic control unit) of which software is the target of the update and an identifier (ECU software ID) of the version of the software before the update.

The server 100 is, for example, a computer device such as a server installed in a specific center or the like, and can transmit each update data for updating the software of the in-vehicle device of each vehicle to each of a plurality of vehicles. The server 100 includes a communication unit (communication module) 101 that communicates with the software update device 50 and a control unit 102 that controls the communication unit 101. The function of the control unit 102 is executed by a processor, a microcontroller, or the like. Further, the server 100 includes a storage unit (not shown), and can receive and store data for updating software of each of the in-vehicle devices from the outside.

### Processing

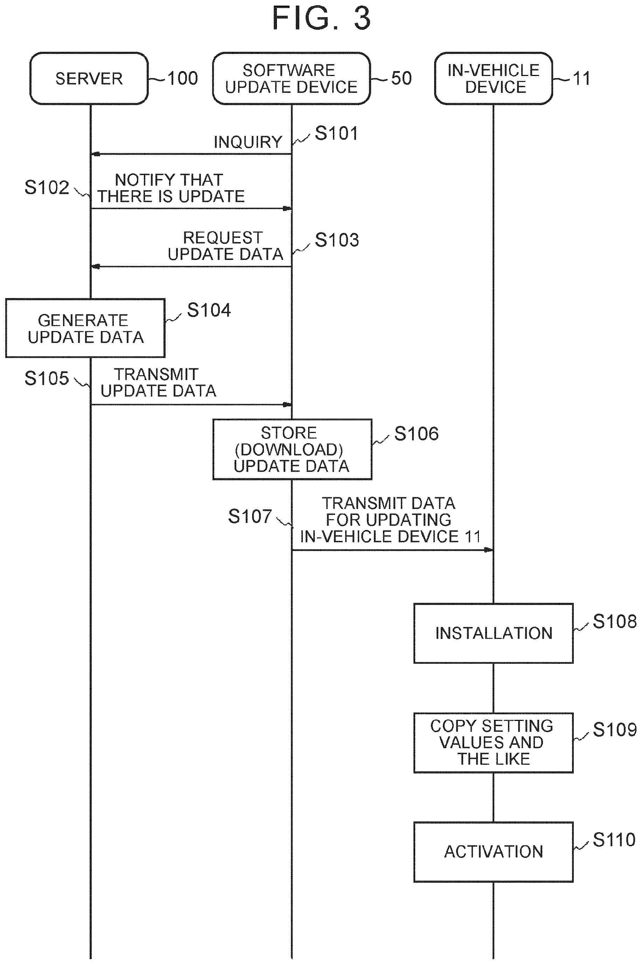

The details of the software update processing according to the embodiment will be described below. FIG. 3 shows a sequence diagram showing an example of this processing. The processing begins in a state in which a power source of the vehicle is turned on (ignition on, power on), for example.

### Step S101

The control unit 53 of the software update device 50 controls the communication unit 51 to make an inquiry to the server 100 of the presence or absence of update software.

### Step S102

When the communication unit 101 of the server 100 receives the inquiry, the control unit 102 controls the communication unit 101 to transmit a notification that there is an update to the software update device 50 when there is the update software. For example, based on information indicating the types of the in-vehicle devices included in the network system 1 and the current software version, the control unit 102 can determine the presence or absence of update software, which is an updated version of the software for these in-vehicle devices. Such information may be stored in advance by the server 100, or may be received from the software update device 50 together with an inquiry. The control unit 102 controls the communication unit 101 to transmit a notification that there is no update to the software update device 50 when there is no update software.

### Step S103

When the communication unit 51 of the software update device 50 receives the notification that there is an update, the control unit 53 controls the communication unit 51 to perform an update data request to the server 100.

### Step S104

When the communication unit 101 of the server 100 receives the update data request, the control unit 102 of the server 100 generates the update data to be transmitted to the vehicle based on the update software provided to the server 100. The update data includes data for updating the software of one or more update-target in-vehicle devices (target electronic control units) of which software is the target of the update.

### Step S105

The control unit 102 of the server 100 controls the communication unit 101 to transmit the update data.

### Step S106

The communication unit 51 of the software update device 50 receives the update data, and the control unit 53 stores (downloads) the update data in the storage unit 52.

### Step S107

The control unit 53 of the software update device 50 starts the processing of installation or installation and activation. Here, as an example, the in-vehicle device 11 is included in the update-target in-vehicle devices of which software is the target of the update, and the control unit 53 transmits the data for updating the software of the in-vehicle device 11 included in the update data received from the server 100 to the in-vehicle device 11. Further, the in-vehicle device 11 is assumed to be the above-mentioned other-bank installation type in-vehicle device.

### Step S108

When the communication unit 111 of the in-vehicle device 11 receives the data, the control unit 113 of the in-vehicle device 11 performs the above-mentioned other-bank installation based on the received data. That is, the control unit 113 of the in-vehicle device 11 writes the update software in the second region of the storage unit 112, which is different from the first region in which the software that is currently executed is stored. As described above, this processing may be performed mainly by the control unit 113 of the in-vehicle device 11 or the control unit 53 of the software update device 50. The first region and the second region may be different banks of the same memory component, or may be different regions of different memory components.

### Step S109

The control unit 113 of the in-vehicle device 11 reads values such as vehicle-specific setting values and learned values stored in a predetermined position in the first region of the storage unit 112, and writes the values in a predetermined position in the second region. That is, the setting values and the like are copied from the first region to the second region. The setting values and the learned values are values set or learned in accordance with the characteristics of the vehicle, user operation, and the like, and are vehicle-specific values that can vary in accordance with the vehicle type and the user's preference. For example, the setting values and the learned values are values representing the designation of an operation mode (sport, eco, etc.), the set temperature of air conditioning, and the like. The setting values and the learned values may be changed, for example, when the in-vehicle device 11 executes software, or when another in-vehicle device requests the in-vehicle device 11. With the processing of this step, the setting values and the learned values can be continuously used for control even after the software is updated.

### Step S110

The control unit 113 of the in-vehicle device 11 performs the above-mentioned activation. That is, the control unit 113 of the in-vehicle device 11 switches the software to be executed from the software before the update stored in the first region to the update software stored in the second region, and activates the update software. This concludes the explanation of the sequence.

The above example is an example of when the update data received from the server 100 includes the data for updating the software of the in-vehicle device 11. However, the software of other in-vehicle devices can be updated in the same manner. Further, the number of update-target in-vehicle devices is not limited, and the software of two or more in-vehicle devices may be updated. Further, as described above, the data transmitted from the software update device 50 to the in-vehicle device in step S107 may be substantially the update software itself, the compressed data of the update software, the difference data from the software before the update, or the like.

When the power source of the vehicle is in the power on state (ignition on, accessory on, etc.) (a state other than the power off state), the in-vehicle device 11 and other in-vehicle devices operate, and the setting values and the learned values stored in the first region may be subject to change. For example, when the power source is changed from a state other than the power off state to the power off state, most of the in-vehicle devices stop operating, so there is little change in the setting values and the learned values, and these values can be stably copied to the second region. Therefore, the processing of step S109 described above may be performed after the power source of the vehicle is changed to the power off state.

Further, the data downloaded in step S106 and received by the in-vehicle device 11 in step S108 may at least partially include the setting values and the learned values. In this case, the control unit 113 of the in-vehicle device 11 may write the setting values and the learned values included in the data in the second region in step S108. Further, in this case, in step S109, the control unit 113 of the in-vehicle device 11 does not copy the setting values and the learned values that are already written in the second region from the first region. In this way, the setting values and the learned values can be reset once as necessary, and the update software can be executed with the setting values and the learned values included in the downloaded update data as initial values.

### Effect

In the present embodiment, when the in-vehicle device updates the software, the vehicle-specific setting values and learned values are copied, so that these values can be efficiently inherited without the need to perform work such as writing the values separately.

The disclosed technology can be interpreted as, an in-vehicle device, a network system including an in-vehicle device, a method executed by a computer included in an in-vehicle device, a program and a computer-readable non-transitory storage medium that stores the program, and a vehicle provided with an in-vehicle device, etc.

The disclosed technology is useful for network systems mounted on vehicles and the like.

## Claims

1. An in-vehicle device (11, 12, 21, 22) included in an in-vehicle network, the in-vehicle device (11, 12, 21, 22) comprising:
a storage unit (112) storing software and one or more values used for executing the software; and
a control unit (113) configured to:
store in a second region in the storage unit (112), update software generated based on update data acquired from a server outside a vehicle, the second region being different from a first region storing the software that is a program to be executed and the one or more values,
store, when the update data includes a value corresponding to one or more values, the value corresponding to the one or more values included in the update data as one or more values for executing the update software in the second region;
when the update data does not include a value corresponding to the one or more values, store, in the second region, the one or more values stored in the first region as one or more values used for executing the update software; and
thereafter, change the program to be executed from the software to the update software.

2. The in-vehicle device (11, 12, 21, 22) according to claim 1, wherein the control unit (113) is configured to execute processing of storing, in the second region, the one or more values stored in the first region, in a state where a power source of the vehicle is turned off.

3. A software update method executed by a computer of an in-vehicle device (11, 12, 21, 22) included in an in-vehicle network and having a storage unit (112) for storing software and one or more values used for executing the software, the software update method comprising:
storing, in a second region of the storage unit (112), update software generated based on update data acquired from a server outside a vehicle, the second region being different from a first region storing the software that is a program to be executed and the one or more values;
storing, when the update data includes a value corresponding to one or more values, the value corresponding to the one or more values included in the update data as one or more values for executing the update software in the second region;
when the update data does not include a value corresponding to the one or more values, storing, in the second region, the one or more values stored in the first region as one or more values used for executing the update software; and
thereafter, changing the program to be executed from the software to the update software.

4. A non-transitory storage medium for storing a software update program that causes a computer to execute the software update method according to claim 3, the software update program being executable by the computer of an in-vehicle device (11, 12, 21, 22) included in an in-vehicle network and having a storage unit (112) for storing software and one or more values used for executing the software.

5. A vehicle comprising the in-vehicle device (11, 12, 21, 22) according to claims 1 or 2.

## Patentansprüche

1. Fahrzeuginterne Vorrichtung (11, 12, 21, 22), die in einem fahrzeuginternen Netzwerk beinhaltet ist, wobei die fahrzeuginterne Vorrichtung (11, 12, 21, 22) Folgendes umfasst:
eine Speichereinheit (112), die Software und einen oder mehrere Werte, die zum Ausführen der Software verwendet werden, speichert; und
eine Steuereinheit (113), die für Folgendes konfiguriert ist.
Speichern, in einer zweiten Region in der Speichereinheit (112), von Update-Software, die basierend auf Update-Daten, wie von einem Server außerhalb eines Fahrzeugs erworben werden, generiert wird, wobei die zweite Region anders als eine erste Region ist, die die Software, die ein Programm ist, das ausgeführt werden soll, und den einen oder die mehreren Werte speichert,
Speichern, wenn die Update-Daten einen Wert beinhalten, der einem oder mehreren Werten entspricht, des Werts entsprechend dem einen oder den mehreren Werten, die in den Update-Daten beinhaltet sind, als einen oder mehrere Werte zum Ausführen der Update-Software in der zweiten Region;
wenn die Update-Daten keinen Wert entsprechend dem einen oder den mehreren Werten beinhalten, Speichern, in der zweiten Region, des einen oder der mehreren Werte, die in der ersten Region gespeichert werden, als einen oder mehrere Werte, die zum Ausführen der Update-Software verwendet werden; und
danach Verändern des Programms, das ausgeführt werden soll, von der Software zu der Update-Software.

2. Fahrzeuginterne Vorrichtung (11, 12, 21, 22) nach Anspruch 1, wobei die Steuereinheit (113) konfiguriert ist, um ein Verarbeiten von Speichern, in der zweiten Region, des einen oder der mehreren Werte, die in der ersten Region gespeichert werden, in einem Zustand, in dem eine Energiequelle des Fahrzeugs ausgeschaltet ist, auszuführen.

3. Software-Updateverfahren, das durch einen Computer einer fahrzeuginternen Vorrichtung (11, 12, 21, 22) ausgeführt wird, die in einem fahrzeuginternen Netzwerk beinhaltet ist und eine Speichereinheit (112) zum Speichern von Software und einem oder mehreren Werten, die zum Ausführen der Software verwendet werden, aufweist, wobei das Software-Updateverfahren Folgendes umfasst:
Speichern, in einer zweiten Region der Speichereinheit (112), von Update-Software, die basierend auf Update-Daten, wie von einem Server außerhalb eines Fahrzeugs erworben werden, generiert wird, wobei die zweite Region anders als eine erste Region ist, die die Software, die ein Programm ist, das ausgeführt werden soll, und den einen oder die mehreren Werte speichert;
Speichern, wenn die Update-Daten einen Wert beinhalten, der einem oder mehreren Werten entspricht, des Werts entsprechend dem einen oder den mehreren Werten, die in den Update-Daten beinhaltet sind, als einen oder mehrere Werte zum Ausführen der Update-Software in der zweiten Region;
wenn die Update-Daten keinen Wert entsprechend dem einen oder den mehreren Werten beinhalten, Speichern, in der zweiten Region, des einen oder der mehreren Werte, die in der ersten Region gespeichert werden, als einen oder mehrere Werte, die zum Ausführen der Update-Software verwendet werden; und
danach Verändern des Programms, das ausgeführt werden soll, von der Software zu der Update-Software.

4. Nichttransitorisches Speichermedium zum Speichern eines Software-Updateprogramms, das verursacht, dass ein Computer das Software-Updateverfahren nach Anspruch 3 ausführt, wobei das Software-Updateprogramm durch den Computer in einer fahrzeuginternen Vorrichtung (11, 12, 21, 22) ausgeführt werden kann, die in einem fahrzeuginternen Netzwerk beinhaltet ist und eine Speichereinheit (112) zum Speichern von Software und einem oder mehreren Werten, die zum Ausführen der Software verwendet werden, aufweist.

5. Fahrzeug, das die fahrzeuginterne Vorrichtung (11, 12, 21, 22) nach Ansprüchen 1 oder 2 umfasst.

## Revendications

1. Dispositif embarqué (11, 12, 21, 22) inclus dans un réseau embarqué, le dispositif embarqué (11, 12, 21, 22) comprenant :
une unité de stockage (112) stockant un logiciel et une ou plusieurs valeurs utilisées pour exécuter le logiciel ; et
une unité de commande (113) configurée pour :
stocker dans une seconde région de l'unité de stockage (112), un logiciel de mise à jour généré sur la base de données de mise à jour acquises à partir d'un serveur à l'extérieur d'un véhicule, la seconde région étant différente d'une première région stockant le logiciel qui est un programme à exécuter et l'une ou plusieurs valeurs ;
stocker, lorsque les données de mise à jour incluent une valeur correspondant à l'une ou plusieurs valeurs, la valeur correspondant à l'une ou plusieurs valeurs incluses dans les données de mise à jour en tant qu'une ou plusieurs valeurs pour exécuter le logiciel de mise à jour dans la seconde région ;
lorsque les données de mise à jour ne comprennent pas de valeur correspondant à l'une ou plusieurs valeurs, stocker, dans la seconde région, l'une ou plusieurs valeurs stockées dans la première région en tant qu'une ou plusieurs valeurs utilisées pour exécuter le logiciel de mise à jour ; et
ensuite, modifier le programme à exécuter du logiciel au logiciel de mise à jour.

2. Dispositif embarqué (11, 12, 21, 22) selon la revendication 1, dans lequel l'unité de commande (113) est configurée pour exécuter un traitement de stockage, dans la seconde région, de l'une ou plusieurs valeurs stockées dans la première région, dans un état dans lequel une source d'alimentation du véhicule est coupée.

3. Procédé de mise à jour de logiciel exécuté par un ordinateur d'un dispositif embarqué (11, 12, 21, 22) inclus dans un réseau embarqué et comportant une unité de stockage (112) pour stocker un logiciel et une ou plusieurs valeurs utilisées pour exécuter le logiciel, le procédé de mise à jour de logiciel comprenant :
le stockage, dans une seconde région de l'unité de stockage (112), d'un logiciel de mise à jour généré sur la base de données de mise à jour acquises à partir d'un serveur à l'extérieur d'un véhicule, la seconde région étant différente d'une première région stockant le logiciel qui est un programme à exécuter et l'une ou plusieurs valeurs ;
le stockage, lorsque les données de mise à jour comprennent une valeur correspondant à une ou plusieurs valeurs, la valeur correspondant à l'une ou plusieurs valeurs incluses dans les données de mise à jour en tant qu'une ou plusieurs valeurs pour exécuter le logiciel de mise à jour dans la seconde région ;
lorsque les données de mise à jour ne comprennent pas de valeur correspondant à l'une ou plusieurs valeurs, le stockage, dans la seconde région, de l'une ou plusieurs valeurs stockées dans la première région en tant qu'une ou plusieurs valeurs utilisées pour exécuter le logiciel de mise à jour ; et
ensuite, la modification du programme à exécuter du logiciel au logiciel de mise à jour.

4. Support de stockage non transitoire pour stocker un programme de mise à jour logicielle qui amène un ordinateur à exécuter le procédé de mise à jour logicielle selon la revendication 3, le programme de mise à jour logicielle étant exécutable par l'ordinateur d'un dispositif embarqué (11, 12, 21, 22) inclus dans un réseau embarqué et comportant une unité de stockage (112) pour stocker le logiciel et une ou plusieurs valeurs utilisées pour exécuter le logiciel.

5. Véhicule comprenant le dispositif embarqué (11, 12, 21, 22) selon les revendications 1 ou 2.
